# DEMANDE DE BREVET EUROPEEN

(11) **EP 1 598 533 A2**
(43) Date de publication de la demande: **23.11.2005**
(21) Numéro de dépôt: 05300187.1
(22) Date de dépôt: 16.03.2005
(51) Int. Cl.: F01N 3/021, G01L 19/00

(54) **Dispositif de prise de pression en amont et en aval d'un filtre a particules d'une ligne d'echappement**

(30) Priorité: 17.05.2004 FR 0405354
(71) Demandeur: Renault s.a.s., 92100 Boulogne Billancourt (FR)
(72) Inventeur: Becamel, Laurent, 78140, Velizy Villacoublay (FR); Devaux, Bertrand, 78960, Voisins le Bretonneux (FR)

(57) **Abrégé**

Dispositif de prise de pression (4) en amont et en aval d'un filtre à Particules (10) d'une ligne d'échappement (2) comprenant un tuyau aval (5) et un tuyau amont (6), chacun étant relié à un capteur différentiel (3), caractérisé en ce qu'au moins un des tuyaux (5,6) comporte un tronçon souple (52,62) comportant une boucle dynamique (13).

## Description

L'invention concerne un dispositif de prise de pression en amont et en aval d'un filtre à particules d'une ligne d'échappement comprenant un tuyau amont et un tuyau aval, chacun étant relié à un capteur différentiel.

Pour assurer le fonctionnement d'un filtre à particules, un système de contrôle comporte, en particulier, des moyens de contrôle de débit des gaz d'échappement circulant dans le filtre à particules. Le fonctionnement des moyens de contrôle est piloté par des moyens de commande recevant, en entrée, des informations relatives aux conditions de fonctionnement du filtre délivrées par des capteurs implantés dans la ligne, l'un des capteurs étant constitué par un capteur de pression différentielle entre un point situé en amont du filtre à particules et un point situé en aval du filtre à particules. Dans la pratique, la prise de pression s'effectue au moyen de tubes rigides de grande longueur en inox fixés par des pattes de maintien sur le filtre à particules. Mais, les tuyaux rigides sont le siège de vibrations. Les tuyaux subissent de hautes températures du fait de leur fixation au filtre à particules ce qui produit des effets de dilatation différentielle. Ces deux phénomènes sont les causes potentielles de bruit et de fatigue.

Afin de pallier ces inconvénients, l'invention a pour objet de minimiser les problèmes d'acoustique et de fiabilité liés à l'implantation d'une prise de pression sur une ligne d'échappement pour l'application d'un filtre à particules.

A cet effet, l'invention propose un dispositif, du type cité ci-dessus, caractérisé en ce qu'au moins un des tuyaux comporte un tronçon souple.

Selon d'autres caractéristiques de l'invention, chaque tuyau comporte un tronçon rigide et un tronçon souple.

Selon d'autres caractéristiques de l'invention, au moins un des tronçons rigides est en acier.

Selon d'autres caractéristiques de l'invention, au moins un des tronçons souples est en caoutchouc, par exemple en silicone.

Selon d'autres caractéristiques de l'invention, le tronçon souple du tuyau aval comporte une partie en caoutchouc silicone et une partie en caoutchouc éthylène acrylique.

Selon d'autres caractéristiques de l'invention, au moins une des parties en caoutchouc silicone comporte une boucle dynamique.

Selon d'autres caractéristiques de l'invention, au moins un des tronçons souples comporte une gaine de protection mécanique.

Selon d'autres caractéristiques de l'invention, au moins un des tronçons souples est incliné d'au moins 3° par rapport à l'axe horizontal défini par les tronçons rigides respectifs.

Selon d'autres caractéristiques de l'invention, la partie en caoutchouc éthylène acrylique est protégée du filtre à particules par un écran thermique ou par une gaine de protection thermique.

Selon d'autres caractéristiques de l'invention, le dispositif comporte des moyens de maintien à la caisse du tronçon souple du tuyau aval et en ce que le dispositif comporte des moyens de montage et d'étanchéité au niveau des liaisons tronçon souple - tronçons rigides, tronçon rigide - ligne échappement.

D'autres caractéristiques et avantages de l'invention apparaîtront à la lecture de la description d'exemples de réalisation en référence à la figure annexée.

La figure 1 représente une ligne d'échappement comportant un dispositif de prise de pression relié à un capteur différentiel, selon l'invention.

La figure 2 représente un dispositif de prise de pression relié à un capteur différentiel, selon l'invention.

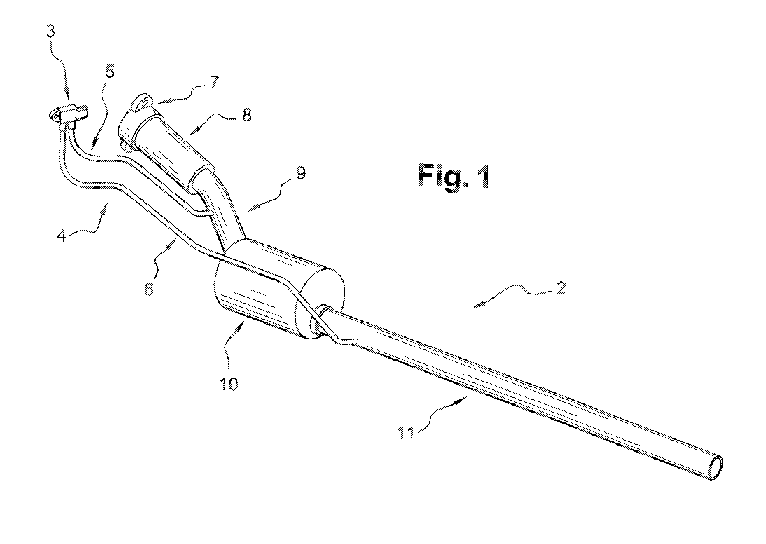

Selon un mode de réalisation, telle que représentée à la figure 1, une partie de ligne d'échappement 2 comporte différents éléments: une bride 7, un flexible 8, des tubes 9,11, un filtre à particules 10. Sur la ligne d'échappement 2, est monté un dispositif de prise de pression 4. Ce dispositif 4 comporte principalement deux tuyaux 5,6 pour une prise de pression : l'un étant monté en amont du filtre à particules 10 et l'autre étant monté en aval du filtre à particules 10. Le tuyau, qui relie le tube en aval 11 du filtre à particules 10 de la ligne d'échappement 2, sera appelé le tuyau aval 6. Le tuyau, qui relie le tube en amont 9 du filtre à particules 10 de la ligne d'échappement 2, sera appelé tuyau amont 5. La pression en amont et en aval est transmise à un capteur différentiel 3 par l'intermédiaire des tuyaux 5,6. Le capteur 3 évalue la différence de pression entre l'amont et l'aval du filtre à particules 10 et transmet l'information à un calculateur, non représenté. Compte tenu du résultat, le calculateur déclenche ou non la régénération du filtre à particules 10.

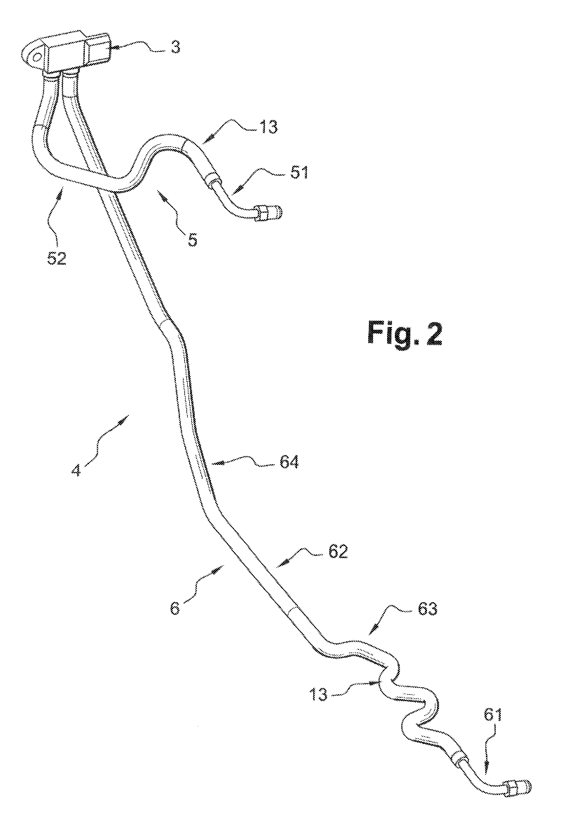

Tel que représenté sur la figure 2, chaque tuyau 5,6 comporte un tronçon rigide 51,61 et un tronçon souple 52,62.

Des moyens d'étanchéité et de montage connus en soient sont montés au niveau de la ligne d'échappement 2 - tronçons rigides 51,61, des raccords tronçons souples 52,62 - tronçons rigides 51,61, des raccords des différentes parties des tronçons souples 52,62, et du capteur différentiel 3 - tronçons souples 52,62, tels que des colliers, pour éviter d'éventuelles fuites.

Des moyens de montage connus en soient sont utilisés pour le montage du dispositif de prise de pression 4 et du capteur différentiel 3 à la caisse, tels que des agrafes.

Tels que représentés aux figures 1 et 2, les tronçons rigides 51,61 relient la ligne d'échappement 2 aux tronçons souples 52,62. Les tronçons 51,61 doivent résister à des températures élevées (jusqu'à 250°C) transmises par la ligne d'échappement 2 mais également à la corrosion. Les tronçons rigides 51,61 peuvent donc être choisis en acier de type Inox 304L. Le tronçon rigide 51 peut être positionné à une distance d'au moins 20 mm du flexible 8. Le tronçon rigide aval 61 peut être positionné à une distance d'au moins 28 mm de la ligne d'échappement 2. La longueur de ces tronçons 51,61 doit être déterminée de façon à limiter la conductibilité thermique au niveau de la liaison avec les tronçons souples 52,62, et de façon à ne pas remonter les bruits solidiens à la caisse et également de façon à garantir une bonne tenue en endurance. La longueur peut être choisie entre 80 et 100 mm. Le diamètre des tronçons rigides 51,61 devra être choisi de façon à ce que les tronçons rigides 51,61 transmettent la pression des gaz d'échappement. Le diamètre extérieur peut être 6 mm et le diamètre intérieur de 4 mm.

Les tronçons souples 52,62 relient les tronçons rigides 51,61 au capteur différentiel 3 au moyen d'un maintien rigide tel qu'un collier. Le diamètre est choisi de façon à transmettre la pression des gaz d'échappement et de façon à créer une interface avec le tronçon rigide sans fuite. Le diamètre extérieur peut être choisi entre 12 et 14 mm et le diamètre intérieur peut être de 6 mm. Ces tronçons 52,62 sont en caoutchouc. Le tronçon souple amont 52 peut être en caoutchouc silicone armé fibres textiles. Compte tenu de la grande longueur du tuyau aval 6, qui peut être supérieure à 700 mm, le tronçon souple aval 62 peut comporter deux parties 63,64. La première partie 63 qui est reliée au tronçon rigide aval 61 peut être en caoutchouc silicone armé fibres textiles et la deuxième partie 64 qui est reliée au capteur différentiel 3 peut être en caoutchouc éthylène acrylique (de type Vamac®).

Le caoutchouc silicone est choisi pour sa tenue à des températures de plus de 200°C, qui sont dues, dans le mode de réalisation au rayonnement et à la conduction des gaz d'échappement. De plus, la partie 63 est positionnée sensiblement à la même distance de la ligne d'échappement 2 que le tronçon rigide 61 c'est à dire à environ 28 mm. Le tronçon souple amont 52 se situe à une même distance que le tronçon rigide 51 de la ligne d'échappement 2 c'est à dire à environ 20 mm. La partie 63 comporte une boucle dynamique 13 de faible raideur statique inférieure à 1 N/mm. Le tronçon souple amont 52 constitue une boucle dynamique 13 de faible raideur statique inférieure à 1 N/mm. Ainsi, les bruits remontés par la ligne d'échappement 2 sont filtrés. La boucle dynamique 13 permet également de réduire la longueur des tuyaux rigides 51, 61. De cette façon la fréquence de leur mode propre est augmentée ce qui permet de fiabiliser leur endurance vibratoire. La longueur de la boucle dynamique 13 est déterminée de façon à absorber les débattements, la dilatation et les dispersions de la ligne d'échappement 2. Par exemple, la boucle dynamique 13 peut mesurer 280 mm pour une longueur maximale de 320 mm de la partie 63.

Le mode de réalisation représenté à la figure 2 présente une boucle dynamique 13 avec des spires selon l'axe horizontal. Selon un autre mode de réalisation, la boucle dynamique 13 peut comporter des spires selon l'axe vertical.

La partie en caoutchouc éthylène acrylique 64, résistant à des températures allant jusqu'à 170°C, est protégée de la conduction et du rayonnement compte tenu de son exposition à la forte température d'échappement, par exemple par un écran thermique positionné entre le filtre à particules 10 et la partie en caoutchouc éthylène acrylique 64 ou par une gaine de protection thermique sertie sur la partie en caoutchouc éthylène acrylique 64. De plus, la partie 64 est positionnée sensiblement à une distance de la ligne d'échappement 2 au niveau du cône 12 du filtre à particules 10 à environ 47 mm.

Une gaine de protection mécanique, par exemple de type Flexguard, peut être ajoutée sur les tronçons en caoutchouc 52,62 pour résister à des éléments de l'environnement de l'architecture en cas de contact. Cette gaine est une maille tricotée disposant d'une élasticité permettant d'être enfilée sur un tuyau et de s'y adapter. Compte tenu de l'augmentation de raideur du tronçon 52,62 lié à l'ajout de cette gaine, elle est à proscrire, par exemple, au niveau de la boucle dynamique 13.

Chaque tronçon souple 52,62 est incliné selon un angle d'au moins 3° par rapport à l'axe horizontal défini par le tube rigide 51,61 correspondant de façon à éviter les condensas et leur éventuelle congélation.

## Revendications

1. Dispositif de prise de pression (4) en amont et en aval d'un filtre à particules (10) d'une ligne d'échappement (2) comprenant un tuyau aval (5) et un tuyau amont (6), chacun étant relié à un capteur différentiel (3), **caractérisé en ce qu'**au moins un des tuyaux (5,6) comporte un tronçon souple (52,62) comportant une boucle dynamique (13).

2. Dispositif de prise de pression (4), selon la revendication 1, **caractérisé en ce que** chaque tuyau (5,6) comporte un tronçon rigide (51,61) et un tronçon souple (52,62).

3. Dispositif de prise de pression (4), selon la revendication 2, **caractérisé en ce qu'**au moins un des tronçons rigides (51,61) est en acier.

4. Dispositif de prise de pression (4), selon l'une des revendications 1 à 3 **caractérisé en ce qu'**au moins un des tronçons souples (52,62) est en caoutchouc, par exemple en silicone.

5. Dispositif de prise de pression (4), selon l'une des revendications 1 à 4, **caractérisé en ce que** le tronçon souple (62) du tuyau aval (6) comporte une partie en caoutchouc silicone (63) et une partie en caoutchouc éthylène acrylique (64).

6. Dispositif de prise de pression (4), selon la revendication 4 ou 5, **caractérisé en ce qu'**au moins une des parties en caoutchouc silicone (52,63) comporte la boucle dynamique (13).

7. Dispositif de prise de pression (4), selon l'une des revendications précédentes, **caractérisé en ce qu'**au moins un des tronçons souples (52,62) comporte une gaine de protection mécanique.

8. Dispositif de prise de pression (4), selon la revendication 2 ou 3, **caractérisé en ce qu'**au moins un des tronçons souples (52,62) est incliné d'au moins 3° par rapport à l'axe horizontal défini par les tronçons rigides respectifs (51,61).

9. Dispositif de prise de pression (4), selon la revendication 5, **caractérisé en ce que** la partie en caoutchouc éthylène acrylique (64) est protégée du filtre à particules (10) par un écran thermique ou par une gaine de protection thermique.

10. Dispositif de prise de pression (4), selon la revendication 2 ou 3 ou 8, **caractérisé en ce que** le dispositif (4) comporte des moyens de maintien à la caisse du tronçon souple (62) du tuyau aval (6) et **en ce que** le dispositif (4) comporte des moyens de montage et d'étanchéité au niveau des liaisons tronçon souple (52,62) - tronçons rigides (51,61), tronçon rigide (51,61) - ligne échappement (2).
